# EUROPEAN PATENT APPLICATION

(11) **EP 2 043 087 A1**
(43) Date of publication of application: **01.04.2009**
(21) Application number: 07018410.6
(22) Date of filing: 19.09.2007
(51) Int. Cl.: G10H 1/00, G06F 17/30

(54) **Method and device for content recommendation**

(71) Applicant: Sony Corporation, Minato-ku Tokyo (JP)
(72) Inventor: Hagg, Wilhelm, 70327 Stuttgart (DE); Kemp, Thomas, 70327 Stuttgart (DE); Eggink, Jana, 70327 Stuttgart (DE); Giron, Frank, 70327 Stuttgart (DE); Zimmer, Taufan, 70327 Stuttgart (DE); Feduszczak, Tomasz, 70327 Stuttgart (DE)
(74) Representative: Müller - Hoffmann & Partner

(57) **Abstract**

A method for content recommendation, comprising: determining a mood and/or constitution of a user; selecting at least one content item from a content item data base based on said mood and/or constitution.

## Description

### METHOD AND DEVICE FOR CONTENT RECOMMENDATION

An embodiment of the invention relates to a method and device for content recommendation. Further, an embodiment of the invention relates to a system for content recommendation.

### BACKGROUND

Today, large content item data bases, e.g. music data bases exist. Such data bases may comprise several thousands or up to several millions of content items such as e.g. songs. In order for a user to make use of such large content item data bases, there exist mechanisms to determine e.g. an ordered list of content items. Such a list is also referred to as playlist. The user may then access, i.e. listen or consume the content items of the playlist one after another.

In order for a user to comfortably access the content item data base, there exist algorithms for determining a playlist automatically. However, it is a difficult task to determine suitable playlists, i.e. lists of content items that will be accepted by a user. Each user may have a different taste and/or preferences and it is important to take the user's taste into account.

It is, therefore, an object of the invention to provide a method and device for content recommendation that may be used for determining at least one content item for a user.

This object is solved by a method and device according to claims 1, 14, and 15, respectively.

Further objects and possible advantages of the invention will become apparent from a consideration of the drawings and ensuing description.

### BRIEF DESCRIPTION OF THE DRAWINGS

- Fig. 1: shows an embodiment of a method for content recommendation;
- Fig. 2: shows a further embodiment of a method for content recommendation;
- Fig. 3: shows an embodiment of a device for content recommendation;
- Fig. 4: shows a further embodiment of a device for content recommendation; and
- Fig. 5: shows still another embodiment of a device for content recommendation.

### DETAILED DESCRIPTION OF INVENTION

In the following, embodiments of the invention are described. It is important to note, that all described embodiments in the following may be combined in any way, i.e. there is no limitation that certain described embodiments may not be combined with others.

In an embodiment of the invention a method for content recommendation comprises determining a mood and/or constitution of a user, and selecting at least one content item from a content item data base based on said mood and/or said constitution. The mood of a user may also be referred to as mental state of the user, i.e. the mood of a person describes the feeling of the person by mood attributes such as e.g. "happy" or "sad". The constitution of a person may also be referred to as physical state of the person and may be described by attributes like e.g. "tired", "ill" or "active".

The mood of the user may be determined as described in US 2006054007, the contents of which is hereby included by reference.

It should be noted that it is possible that any method of music recommendation such as collaborative filtering and signal analysis based recommendations might be combined with the above described method (user mood method). In that case, the general user profile may get a new dimension, the current user mood.

In a further embodiment the method for content recommendation may comprise determining or receiving a user profile of a user, determining a mood and/or a constitution of said user, and selecting at least one content item from a content item data base based on said user profile and based on said mood and/or said constitution. The user profile and/or said at least one content item may be received from a server.

By selecting said at least one content item from a content item data base based on the mood and/or constitution of a user, the resulting mood based recommendations will address the musical needs of people and increase user satisfaction of recommendation systems. The mood of the listeners may be estimated by observing the user, the user health conditions as well as the user's current environment. Further, it may be possible to constantly observe the user and select the content items based on the current mood or current constitution of the user. Therefore, the selected content items may vary each time the user uses the system. Therefore, the selected content items may be more diversified than in prior art systems.

In an embodiment, a respective content item is a piece of music, e.g. a song and the content item data base is a music data base. A content item can also be a video sequence or other entertainment entity.

Further, the method may comprise selecting at least one piece of music based on a predetermined music mood of said at least one piece of music. In other words, the music mood of a piece of music may be determined, i.e. it is e.g. determined that a certain song is "happy". In this example, if the mood of the user is "happy", then this piece of music may be selected. The music mood may be determined based on meta data of the piece of music or based on an automatically detected mood of a respective piece of music.

It may be possible that the at least one piece of music is determined in accordance with, i.e. congruent, or contrary to the mood and/or the constitution of the user. Whether a piece of music is determined in accordance with or contrary to the mood of the user may depend on the type of the user. In general, there are two ways users react on their personal mood. The congruent (affirmative) music listener generally likes to listen to music that corresponds to his current mood. If the user is happy, he may prefer to hear happy music. On the other hand, a contrast listener intends to influence his mood by listening to music. If the contrast listener is sad and his target mood he would like to have is happy, he will prefer to listen to happy music. The recommendation system needs to differentiate either automatically between the congruent and the contrast listener or the user might change this on demand. In other words, the user may preset whether he considers himself to be a congruent listener or a contrast listener. In case the user set the system to "congruent listener", the system may determine a piece of music having a music mood in accordance with the mood of the user. On the other hand, if the system is set to "contrast listener", then the system may choose pieces of music having a music mood contrary to the mood of the user.

The decision between accordantly determining (congruent listener mode) or contrarily determining (contrast listener) may be based on a time of day. For example, in the morning, most users may be contrast listeners, i.e. the users choose music contrary to their mood, whereas in the evening a user may be more likely to be a congruent listener.

Said mood and/or said constitution may be determined based on a time of day, a biorhythm of said user, a menstrual cycle of said user, a current season, a current day of the week, a location of said user, and/or a company of said user.

The company of the user may be determined based on speaker identification. For example, it may be that the company of the user is determined to be a certain best friend and the system may know or have learned that when in company of this friend, the user generally likes to hear happy music.

It may also be possible to derive the mood and/or constitution of the user based on a received speech signal. In other words, the mood and/or constitution of the user may be detected in a speech signal of the user.

It may also be possible to observe a behavior and/or an action of the user, and determine the mood and/or constitution based on the observed behavior and/or action. For example, the user might change the lighting conditions by turning down the lights and/or lighting a candle. This may indicate that the user is e.g. in a romantic or calm mood.

The lighting condition may also be detected by a photo sensor and the mood and/or constitution may be based on the detected lighting conditions. It may also be possible to detect a volume of a respective piece of music, said volume having been set by said user and determining said mood and/or said constitution based on the detected volume.

In a further embodiment, the method may also comprise detecting a health condition of the user, and determining the mood and/or constitution based on the detected health condition.

The health condition may be determined based on measuring a pulse frequency, a skin resistance, a skin temperature, a hormone concentration, a concentration of adrenaline and/or a blood pressure of said user.

The device for content recommendation may comprise a user profiling mechanism adapted to determine a user profile of a user, a mood determination mechanism adapted to determine a mood and/or a constitution of said user, a content item data base, and a content selection mechanism adapted to select at least one content item from said content item data base based on said user profile and said mood and/or constitution.

The device may further comprise a photo sensor adapted to detect a lighting condition, wherein the mood determination mechanism is adapted to determine said mood and/or said constitution depending on the lighting condition.

The device may also comprise a volume detection mechanism adapted to detect a set volume wherein the mood determination mechanism is adapted to determine the mood and/or constitution depending on the set volume.

The device may further comprise a pulse determining mechanism adapted to determine a pulse of a user, wherein the mood determination mechanism is adapted to determine the mood and/or the constitution depending on the pulse.

The device may also comprise a microphone adapted to receive speech of a user, wherein the mood determination mechanism is adapted to determine the mood and/or the constitution from the speech.

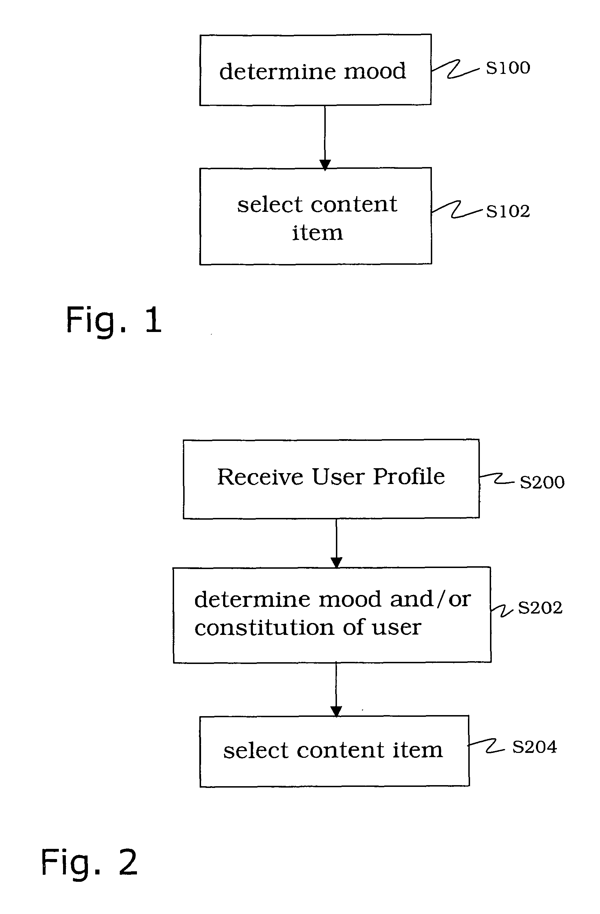

In Fig. 1 a mood determining step S100 is shown, wherein a current mood of a user may be determined. Further, Fig. 1 shows a selection step S 102 in which at least one content item may be selected depending on the current mood determined in determining step S100.

Thus, according to the embodiment of Fig. 1, it may be possible to select at least one content item from a content item data base based on a mood and/or constitution of a user.

Fig. 2 shows a further embodiment of the invention, wherein a user profile is received and/or determined in a receiving step S200. The user profile may e.g. be received from a server or from a storage contained in a device for executing the method for content recommendation.

Then, in a further determining step S202, the mood and/or constitution of a user is determined. The mood and/or constitution of the user may also be determined depending on the user profile. For example, if the user profile indicates that the user generally likes "happy" music, then this may be considered when determining the mood of the respective user. For example, the user profile may indicate whether the user is a contrast listener or a congruent listener.

Then, in a selection step S204, at least one content item is selected depending on the determined mood and/or constitution of the user.

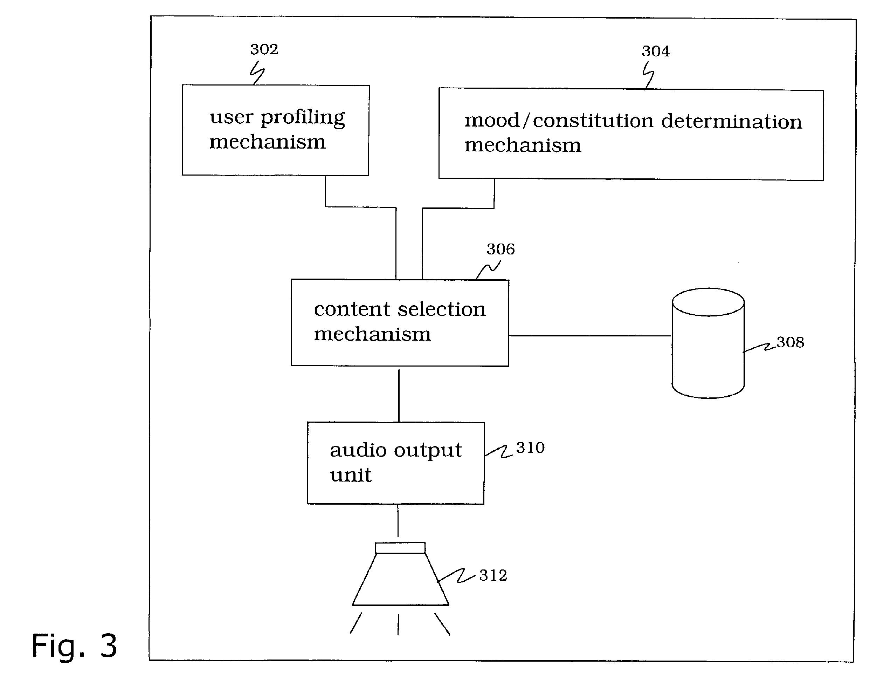

Fig. 3 shows an embodiment of a device 300 for content recommendation. Device 300 comprises a user profiling mechanism 302, a mood/constitution determination mechanism 304, a content selection mechanism 306, a data base 308, an audio output unit 310 and a loudspeaker 312.

The user profiling mechanism 302 may be responsible for determining and/or adapting or updating a user profile. For example, the device 300 may also comprise the possibility for the user to manually select content items. The manually selected content items may be used for influencing the user profile. Also, the device 300 may comprise means for the user to rate certain content items. The rating for content items may also be used for updating the user profile by the user profiling mechanism 302.

The mood/constitution determination mechanism 304 may be configured to determine a mood and/or constitution of a user.

The content selection mechanism 306 is connected to the user profiling mechanism 302, mood/constitution determination mechanism 304 and data base 308. Data base 308 may comprise content items such as e.g. audio data (songs) and/or video data (video clips). The content selection mechanism 306 selects content items from data base 308 based on the user profile determined by user profiling mechanism 302 and based on the mood/constitution determined by the mood/constitution determination mechanism 304.

The content selection mechanism 306 may then send the selected content items to the audio output unit 310, which in turn controls loudspeaker 312.

Device 300 may be e.g. a handheld music storage device, a mobile phone or a personal digital assistant (PDA) type device.

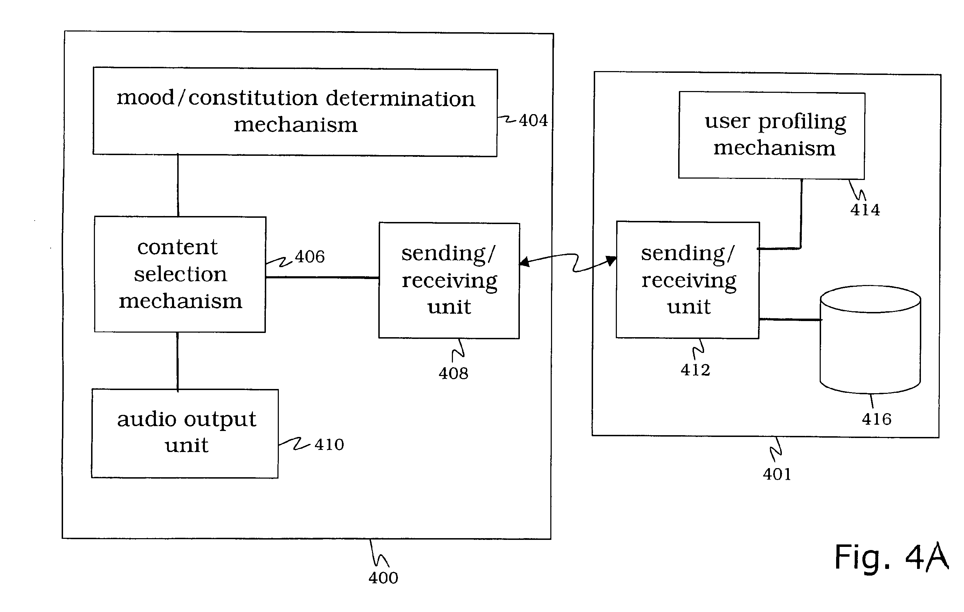

Fig. 4A shows a further embodiment of the invention comprising a client 400 and server 401.

Client 400 comprises a mood/constitution determination mechanism 404, a content selection mechanism 406, a sending/receiving unit 408 and an audio output unit 410. Server 401 comprises a sending/receiving unit 412, a user profiling mechanism 414 and a content item data base 416.

In the embodiment of Fig. 4A, client 400 may receive a user profile from sending/receiving unit 412 of server 401. The user profile may be provided by the user profiling mechanism 414. Thus, the computational burden for determining the user profile will be at the server side, i.e. within server 401. Of course, it is possible that the user profile be stored at the client side 400 and only temporarily updated by a connection with server 401.

Further, in the embodiment of Fig. 4A, content items may be provided by the server 401. Thus, content selection mechanism 406 may select content items only based on an identifier and sends the identifier to server 401. Server 401 then retrieves the respective audio data corresponding to the identifier from data base 416 and supplies the respective audio data to client 400. Client 400 may then output the audio data supplied by the server 401 via audio output unit 410.

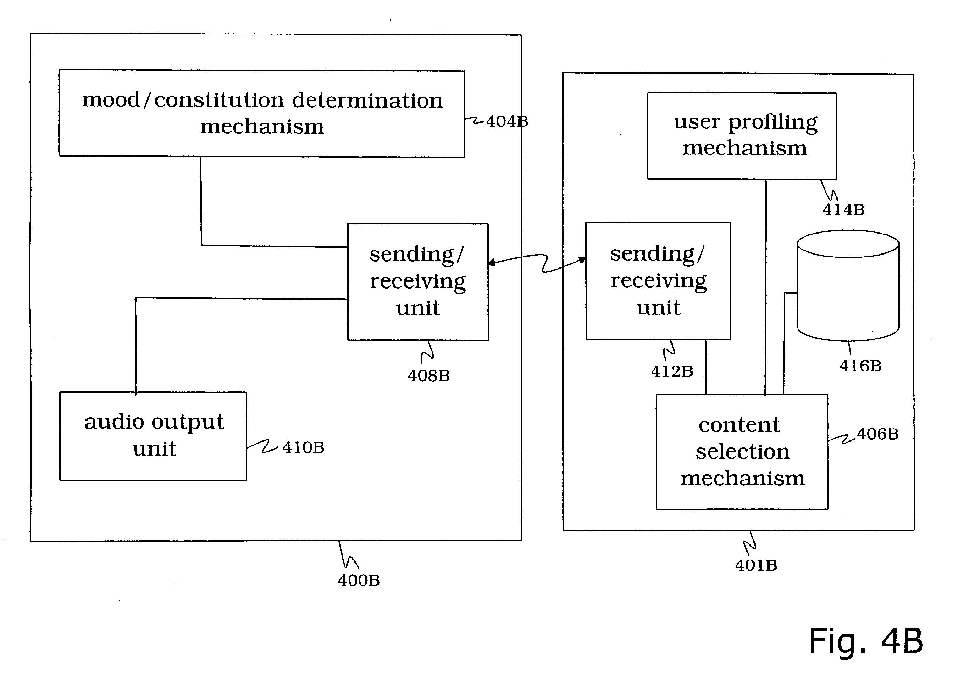

Fig. 4B shows a further embodiment of the invention comprising a client 400B and a server 401B.

Client 400B comprises a mood/constitution determination mechanism 404B, a sending/receiving unit 408B, and an audio output unit 410B. Server 401B comprises a user profiling mechanism 414B, a sending/ receiving unit 412B, a content item data base 416B, and a content selection mechanism 406B.

Thus, in the embodiment of Fig. 4B, server 401B comprises the content selection mechanism 406B (and not client 400B as in the embodiment of Fig. 4A). Thus, the computational burden at client 400B may be kept at a low level compared to server 401 B.

In the embodiment of Fig. 4B, mood/constitution determination mechanism 404B may determine the mood of the user and transmit the determined mood via sending/receiving unit 408B and sending/receiving unit 412B to content selection mechanism 406B at client 401B. Content selection mechanism 406B may then determine/select a content item from content item data base 416B based on the determined mood and a user profile provided by user profiling mechanism 414B.

A selected content item may then be transmitted to client 400B via sending/receiving unit 412B, and sending/receiving unit 408B. The transmitting may be realized as downloading and/or streaming of audio data. Sending/receiving unit 408B may then transmit the received audio to audio output unit 410B, which outputs the audio data corresponding to the determined content item to the user.

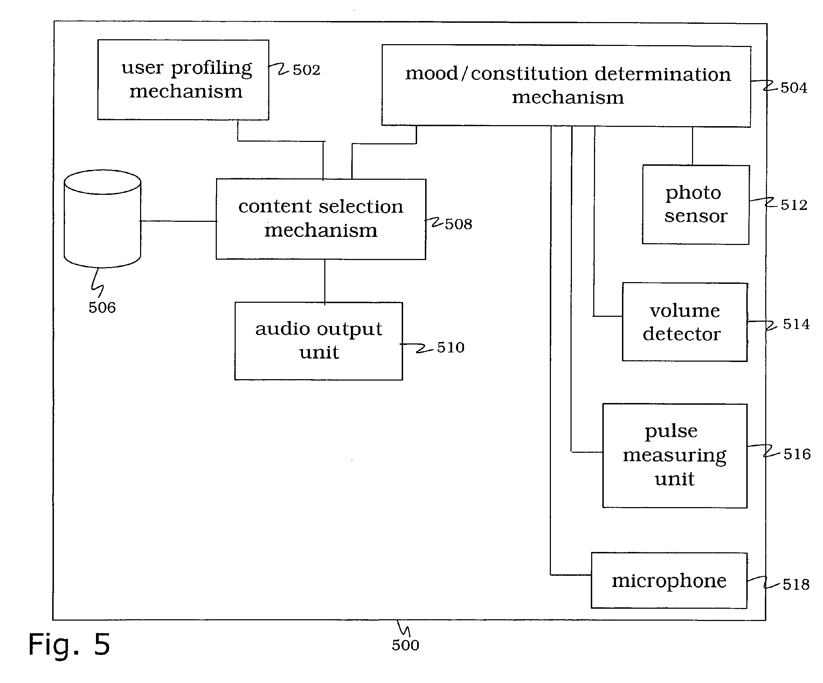

Fig. 5 shows a further embodiment of a content recommendation device. The content recommendation device 500 of Fig. 5 comprises a user profiling mechanism 502, a mood/constitution determination mechanism 504, a data base 506, a content selection mechanism 508, and an audio output unit 510. Further, the device 500 may comprise a photo sensor 512, volume detector 514, pulse measuring unit 516 and/or microphone 518.

User profiling mechanism 502 may be used for determining a user profile, and mood/constitution determination mechanism 504 may be used for determining a current mood of a user. The content selection mechanism 508 may select content items from data base 506 depending on the user profile determined by user profiling mechanism 502 and depending on the current mood and/or current constitution of a user determined by the mood/constitution determination mechanism 504. After selection, the content items may be played and/or displayed to the user via audio output unit 510.

The mood/constitution determination mechanism 504 may determine the current mood/constitution of the user based on a lighting condition detected by photo sensor 512, a set volume determined by volume detector 514, a measured pulse detected by pulse measuring unit 516 and/or a speech signal determined by microphone 518.

As seen from the above elucidations, according to embodiments of the invention, it is possible to provide recommendations based on a user mood and/or constitution. For example, if a user feels sad he may likes said music, however, if he feels happy, he might want to listen to happy music. In the morning the user might be tired and likes to have calm music and so on. Basically, the assumption may be made that the musical needs of people depend on their current mood. Addressing the user's mood and constitution that might be selected or estimated from different sensors may allow an optimization of music recommendations.

The current user mood may be implicitly activated by the user or might be estimated by a mood detection mechanism. The different moods might be predefined or specified by the user in order to allow an efficient mood selection. Moods estimated by the system might be determined by an unsupervised classification of monitored user events, i.e. the mood detection may be done without any feedback.

Of course, it is also possible that the mood detection be dependant on feedback regarding the correct classification of the user's mood.

The mood may be determined from environmental conditions. Among others, a person's mood might be influenced by e.g. the time of day, biorhythm of the person (23/28/33 day rhythm), the menstrual cycle, the season, the day of the week, the location, and/or the company.

Some of these parameters might be determined by sensors. For example the company of a person might be determined by speaker identification. The parameters may then be used to estimate the person's mood.

A second approach to estimating user mood may be to detect the mood directly from user observations. For example, it may be possible that the current mood of the user leads to the user performing certain typical actions. These typical actions in turn may be used for an indirect measurement of the user mood. For example, the user might change the lighting conditions by lighting a candle when he is in a romantic mood. This might be detected by a photo sensor. The user may also change the music volume based on his mood. It may also be possible to determine the mood from the speech which is generally directly influenced by the mood.

A further approach to mood detection may be monitoring of health conditions. The user's health conditions may be described by different parameters such as pulse frequency, skin resistance, skin temperature, hormone concentrations such as adrenaline and/or blood pressure.

Regarding the selection of content items depending on the mood, it should be noted that there are in general two ways users react on their personal mood. The congruent (affirmative) music listener likes to listen to music that corresponds to his current mood. If the user is happy, he will like to hear happy music. On the other hand, the contrast listener intends to influence his mood by listening to music. If the contrast listener is sad and his target mood were he would like to be is happy, he will prefer to listen to happy music. The recommendation system needs to differentiate either automatically between the congruent and the contrast listener or the user might change this on demand.

A special case of contrast listeners are users that utilize music for medical effects. Music may influence the well-being of a person under different circumstances. If people are excited too much or they cannot sleep calm or classical music might have a positive influence on their medical condition. The medical effect of music may also be helpful for people with psychological problems like depressions and so on. Recommending the right music at the right time could help those people to avoid extreme situations of their personal mood.

Another application mood based music recommendations may be the car environment. Tired drivers might wake up by playing aggressive music while aggressive drivers might slow down by some calm music. This could help to avoid accidents.

Besides music recommendation itself, the user mood could be used for all kinds of recommendations such as TV programs or web recommendations.

## Claims

1. Method for content recommendation, comprising:
determining or receiving a user profile of a user;
determining a mood and/or a constitution of said user; and
selecting at least one content item from a content item data base based on said user profile and said mood and/or constitution.

2. Method according to claim 1, wherein a respective content item is a piece of music and said content item data base is a music data base.

3. Method according to claim 2, comprising
selecting at least one piece of music based on a predetermined music mood of said at least one piece of music.

4. Method according to claim 3, wherein said at least one piece of music is determined in accordance with or contrary to said mood and/or said constitution.

5. Method according to claim 4, wherein a decision between accordantly determining or contrarily determining is based on a time of day.

6. Method according to any one of the preceding claims, wherein said mood and/or said constitution is determined based on a time of day, a biorhythm of said user, a menstrual cycle of said user, a current season, a current day of the week, a location of said user, and/or a company of said user.

7. Method according to claim 6, wherein said company is determined based on speaker identification.

8. Method according to any one of the preceding claims, comprising:
receiving a speech signal of said user; and
determining said mood and/or said constitution based on said speech signal.

9. Method according to any one of the preceding claims, comprising:
observing a behavior and/or an action of said user; and
determining said mood and/or said constitution based on the observed behavior and/or action.

10. Method according to any one of the preceding claims, comprising:
detecting a lighting condition; and
determining said mood and/or said constitution based on the detected lighting condition.

11. Method according to any one of claims 2 to 10, comprising:
detecting a volume of a respective piece of music, said volume having been set by said user; and
determining said mood and/or said constitution based on the detected volume.

12. Method according to any one of the preceding claims, comprising:
detecting a health condition of said user; and
determining said mood and/or said constitution based on the detected health condition.

13. Method according to claim 12, wherein said health condition is determined based on measuring a pulse frequency, a skin resistance, a skin temperature, a hormone concentration, a concentration of adrenalin and/or a blood pressure of said user.

14. Means for content recommendation, comprising:
means for determining or receiving a user profile of a user;
means for determining a mood and/or a constitution of said user; and
means for selecting at least one content item from a content item data base based on said user profile and said mood and/or constitution.

15. Device for content recommendation, comprising:
a user profiling mechanism configured to determine a user profile of a user;
a mood determination mechanism configured to determine a mood and/or a constitution of said user;
a content item data base; and
a content selection mechanism configured to select at least one content item from said content item data base based on said user profile and said mood and/or constitution.

16. Device according to claim 15, further comprising:
a photo sensor configured to detect a lighting condition, wherein said mood determination mechanism is configured to determine said mood and/or said constitution depending on said lighting condition.

17. Device according to claim 15, further comprising:
a volume detection mechanism configured to detect a set volume, wherein said mood determination mechanism is configured to determine said mood and/or said constitution depending on said set volume.

18. Device according to claim 15, further comprising:
a pulse determination mechanism configured to determine a pulse of a user, wherein said mood determination mechanism is configured to determine said mood and/or said constitution depending on said pulse.

19. Device for content recommendation, comprising:
a sending/receiving unit configured to receive a user profile of a user and/or content items;
a mood determination mechanism configured to determine a mood and/or a constitution of said user;
a content selection mechanism configured to select and/or request at least one content item from a server based on said user profile and said mood and/or constitution.

20. A computer readable medium including computer program instructions that cause a computer to execute a method of content recommendation comprising:
determining or receiving a user profile of a user;
determining a mood and/or a constitution of said user; and
selecting at least one content item from a content item data base based on said user profile and said mood and/or constitution.

21. Method for content recommendation, comprising:
determining a mood and/or constitution of a user;
selecting at least one content item from a content item data base based on said mood and/or constitution.

22. Method for music recommendation, said music recommendation comprising at least one piece of music, said method comprising:
determining or receiving a user profile of a user;
determining a mood and/or constitution of said user;
determining a music mood for said at least one piece of music; and
selecting said at least one piece of music from a music data base based on said music mood, said user profile and said mood and/or constitution.

23. System comprising:
a server having a data base comprising content items; and
a content recommendation device having
a user profiling mechanism configured to determine and/or store a user profile of a user;
a sending/receiving unit configured to receive content items from said server;
a mood determination mechanism configured to determine a mood and/or a constitution of said user;
a content selection mechanism configured to select and/or request at least one content item from said server based on said user profile and said mood and/or constitution.

24. A computer readable medium including computer program instructions that cause a computer to execute a method of content recommendation comprising:
determining a mood and/or constitution of a user;
selecting at least one content item from a content item data base based on said mood and/or constitution.
